# EUROPEAN PATENT APPLICATION

(11) **EP 2 583 938 A1**
(43) Date of publication of application: **24.04.2013**
(21) Application number: 11185981.5
(22) Date of filing: 20.10.2011
(51) Int. Cl.: C01B 13/02, F17C 11/00, C01B 13/08

(54) **Method to release oxygen from oxygen carrier material**

(71) Applicant: Alstom Technology Ltd, 5400 Baden (CH)
(72) Inventor: Grubbström, Jörgen Per-Olof, 352 55 VÄXJÖ (SE); Ajhar, Marc, 65193 WIESBADEN (DE)
(74) Representative: Simonsson, Erik

(57) **Abstract**

The present invention relates to a method to release oxygen from an oxygen carrier material by an oxygen-uptake-release process. The method comprises the steps of: uptake of oxygen by oxygen carrier materials in a first reactor vessel 2; transferring the oxygen-loaded carrier particles to a second reactor vessel 3; releasing the oxygen from the oxygen carrier material in the said second reactor vessel, wherein the partial pressure of oxygen in the gas atmosphere of said second reactor vessel is lower than equilibrium partial pressure at operating temperature; re-introduce the oxygen carrier material, after release of the oxygen, to the first reactor vessel 2. The oxygen is then forwarded for further processing. The present invention also relates to a system for producing oxygen by this process.

## Description

### Field of the invention

The present invention relates to a method to release oxygen from particles containing oxygen, so-called oxygen carrier material. The present invention also relates to a system for producing oxygen using this oxygen carrier material.

### Background of the invention

For oxy-fired power plants, an oxygen-producing unit is required. The oxygen herein may be produced by a cryogenic process, which is a commercially available process. However, there is a demand for finding suitable alternative methods to produce oxygen for oxy-fired power plants.

Another method to provide oxygen is realized in a process referred to as chemical looping combustion (CLC). In this process, particles made from metal oxides or other inorganic materials bind oxygen from air. These oxygen carrier particles are used in connection with burning fuel, namely to provide pure oxygen to the combustor in a fuel system, also named the "fuel reactor". For example, metal oxides used as chemical looping particles are ilmenite, (iron-titania oxide), manganese-based ores or iron oxide waste materials (oxide scales).

In the previous, known application of chemical looping with metal oxides, oxidation/reduction could be performed according to the following reactions:

| | |
|---|---|
| In the air reactor: | MeₓO_{y-2} + O₂ (g) - > MeₓO_{y} |
| In the fuel reactor: | MeₓO_{y} + H₂ - > MeₓO_{y-1} + H₂O |
| | MeₓO_{y} + CO -> MeₓO_{y-1} + CO₂ |

Solid fuels added to the fuel reactor are gasified and the synthesis gases H₂ and CO (to a smaller extent CH₄) are oxidized to water vapour and CO₂.

Another example of metal oxide particles used for transporting oxygen are so-called Chemical Looping Oxygen Uncoupling (CLOU) particles.

In current research efforts, CLOU particles are used to provide oxygen to the fuel reactor, where the particles spontaneously release oxygen with which the fuel (in particular coal) is burned. The main difference to conventional oxygen carriers is that the oxygen is released due to the different operating conditions in the fuel reactor, namely temperature and oxygen partial pressure. This practice enables the fuel to be combusted directly without being gasified to H₂ and CO. In previous experimental setups, the CLOU particles were operated in the same process configuration as conventional oxygen carriers as described above, namely in direct contact with coal, char, ash and possibly soot in the fluidized bed fuel reactor. In such a harsh reactor environment, a main concern is that the CLOU particles may become deactivated. The deactivating process is also dependant on the type of solid fuel used. Therefore, there is a demand for a more flexible method to release oxygen from oxygen carrier material without the drawbacks mentioned above and uncoupled from the need of direct oxygen consumption by fuel combustion.

### Summary of the invention

By the present invention, some of the drawbacks and deficiencies of prior art methods and systems are overcome.

By the present invention, a method is provided wherein the oxygen is released outside the fuel reactor, or the combustor, to provide a method being independent of a fuel reactor, as well as a system wherein the oxygen is released without subsequent immediate reaction in the fuel reactor.

According to aspects illustrated herein, a method is provided for releasing oxygen from oxygen carrier material, that can be used in an oxy-fired power plant for example, comprising the steps of:
- uptake of oxygen by oxygen carrier material present in a first reactor vessel (air reactor);
- transferring the oxygen carrier material to a second reactor vessel;
- releasing the oxygen from the oxygen carrier material in the second reactor vessel, wherein the partial pressure of oxygen in the gas atmosphere of said second reactor is lower than equilibrium partial pressure at operating temperature;
- transferring the oxygen carrier material after release of the oxygen, back to the first reactor vessel;
- forwarding the released oxygen for further processing.

According to an aspect of the invention, the partial pressure difference needed for oxygen release is provided by reducing the oxygen concentration in the second reactor vessel.

An advantage obtained by the invention is that if the oxygen carrier material is the only solid material in the first and second reactor vessels, there is no need for any solids-solids-type separating steps or means, as has been a requirement in previous known methods.

Any oxy-fired combustion unit could be retrofitted by the invention. The invention therefore avoids the need of producing oxygen with cryogenic processes. As the oxygen carrier material is not in any contact with the fuel itself -as proposed by prior CLOU systems- the carrier material life time is also bound to be greatly enhanced.

An advantage obtained by the invention is a method provided wherein the oxygen obtained in the second reactor vessel is essentially pure for further processing. Thus, there is no need for extensive purification of the oxygen before the gas is used.

According to other aspects illustrated herein, a system is provided to produce oxygen to be used in an oxy-fired power plant, wherein oxygen is generated by uptake / release of oxygen from oxygen carrier material and the system comprises
- a first reactor vessel comprising oxygen carrier material able to take up oxygen from air;
- a second reactor vessel into which the oxygen carrier material being loaded with oxygen of the first reactor vessel is transferred for oxygen release;
- means of transferring the oxygen for further processing, such as to an oxygen sink, to oxygen-consuming combustion, for example to an oxy-fired combustor; or to oxygen storage.

According to an aspect of the invention, the second reactor vessel included in the system is operating at a partial pressure of oxygen so that it is lower than equilibrium partial pressure at specified temperature making oxygen release possible.

The above described and other features are exemplified by the following figures and detailed description. Further objects and features of the present invention will be apparent from the description and claims.

### Brief description of the drawings

The present invention is described in more detail below with reference to the appended drawings in which:
Fig. 1 is a schematic side view of a system for chemical looping oxygen uncoupling used as an oxygen supply system for a combustion chamber.
Fig. 2 is a schematic side view of a system for chemical looping oxygen uncoupling integrated in an oxy-fired power plant.
Fig. 3 is a schematic side view of a system of a chemical-looping combustion system (prior art).

### Detailed description of the invention

The present invention relates to a method wherein oxygen is provided by releasing oxygen from oxygen carrier material. The oxygen may then be used in, for example, an oxy-fired power plant. The method comprises the steps described above, including uptake of oxygen and release of oxygen in different, separate reactor vessels. The process is a continuous process of providing oxygen.

The release of oxygen in the second reactor vessel is achieved by having a lower partial pressure of oxygen in the gas atmosphere of the second reactor vessel than equilibrium partial pressure at operating temperature. One way to induce oxygen release from the particles is to lower the partial pressure in the second reactor vessel by means of applying vacuum pressure (e.g. by using a vacuum pump). Another way is to use a stripping medium.

The concentration of oxygen can be increased in an additional step (depending on the proposed process requirements), before it is forwarded from the second reactor vessel for further usage, for example to an oxy combustor or an oxygen storage tank. The list is not exhaustive. The concentrating of the oxygen may be achieved by removing at least parts of the stripping medium from the stream forwarded from the second reactor vessel. For example, this may be performed by condensation of the stripping medium, or some other selective removal such as adsorption, absorption or membrane technology.

Further, the at least partially separated stripping medium can be reheated and recirculated to the second reactor vessel re-inducing oxygen release.

CLOU particles may be used as oxygen carrier material. It is a metal oxide of formula *n*MeₓO_{y}, wherein the Me denotes a metal selected from Cu, Fe, Mn, Ni, Co, *n* is a stochiometric coefficient and *x*,*y* define how many oxygen and metal atoms are in the oxygen carrier molecule. In the process of oxygen uptake from an air stream, the reaction could possibly be the following (depending on the reaction chemistry of the considered particle):

MeₓO_{y-2} + O₂ (g) < - > MeₓO_{y}

The MeₓO_{y} then releases the oxygen, following reaction

MeₓO_{y} < - > MeₓO_{y-2} + O₂ (g).

Examples of metal oxides suitable for the oxygen-uptake-release cycle reaction are CuO/Cu₂O, Mn₂O₃/Mn₃O₄, Co₃O₄/CoO.

The metal oxide MeₓO_{y} is most often combined with a supporting agent, such as, for example ZiO₂, TiO₂ etc. The fluidizing properties of the CLOU particles carrying the oxygen are thereby improved. Further, deactivation of the CLOU particles may also be delayed, or even avoided, by applying a supporting agent. The present invention provides a system wherein CLOU particles are included as the oxygen carrier material and the looping is independent from any need for direct oxygen consumption in a fuel reactor or system.

According to one aspect of the invention, the oxygen carriers are particles of metal oxides. These particles are usually the only solid material in the first and second reactor vessels, thus there is no need for any solids-solids-type separating steps or means, as has been a requirement in previous known methods.

The system of the present invention comprises a first reactor vessel may also be called an 'air reactor', where the oxygen uptake of the carrier particles takes place.

The reaction between the particles and the oxygen present in the air is an exothermic reaction. The reaction is performed at a temperature between 800 and 1200 degrees Celsius, for example at a temperature of around 1000 degrees Celsius depending on the oxygen carrier material.

The system of the invention comprises a second reactor vessel wherein the oxygen is released from the oxygen carrier material. The following reaction takes place in this second reactor vessel.

The rate of oxygen release depends on the mass transfer coefficient (depending on operating conditions, notably temperature and medium flow) and the oxygen partial pressure difference as the driving force for mass transport. The oxygen equilibrium partial pressure increases with higher temperature, resulting in a faster desorption rate as the partial pressure difference also increases. However, oxygen release leads to an increase of the oxygen partial pressure in the reactor vessel, so the rate of oxygen release decreases.

The reaction performed in the second reactor vessel is performed at a temperature of about 850 degrees Celsius, depending on the oxygen carrier material.

In one embodiment of the invention the process may be discontinuous, by taking place in one reactor vessel. The reactor vessel comprising the oxygen carrier material is operating, alternatively, periodically in oxidation and reduction, thus uptaking oxygen from the air introduced into the reactor vessel, stopping the air flow and then releasing oxygen by using stripping medium introduced into the reactor vessel. Thus, a reactor vessel may comprise two or more reaction zones, or modes, herein included in the 'first reactor vessel' and the 'second reactor vessel'. In one zone, the oxygen carrier is oxidized by air, in the other, the oxygen carrier is reduced by the stripping medium. The process is operated, alternatively, in order to prevent an intermixing of air and stripping medium. In one arrangement, continuous one-reactor system with two or more reaction zones can be achieved in a vessel that works with the same principles as rotary- heat exchangers.

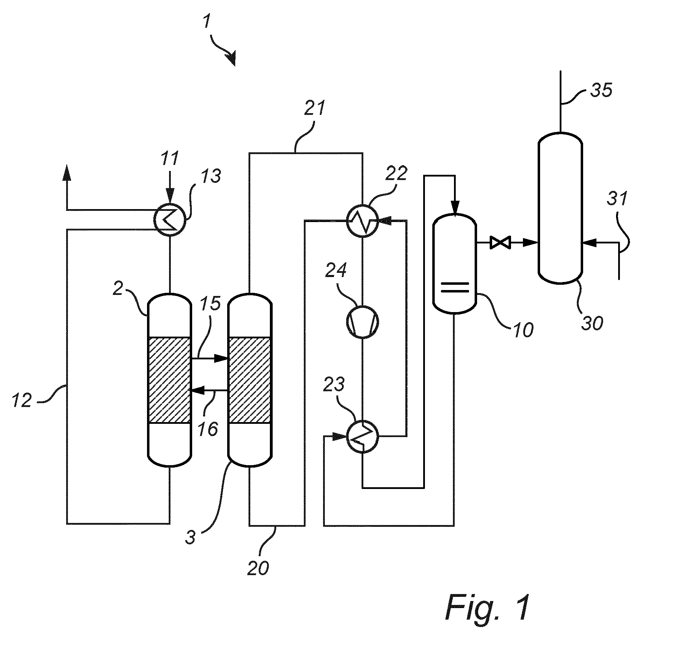

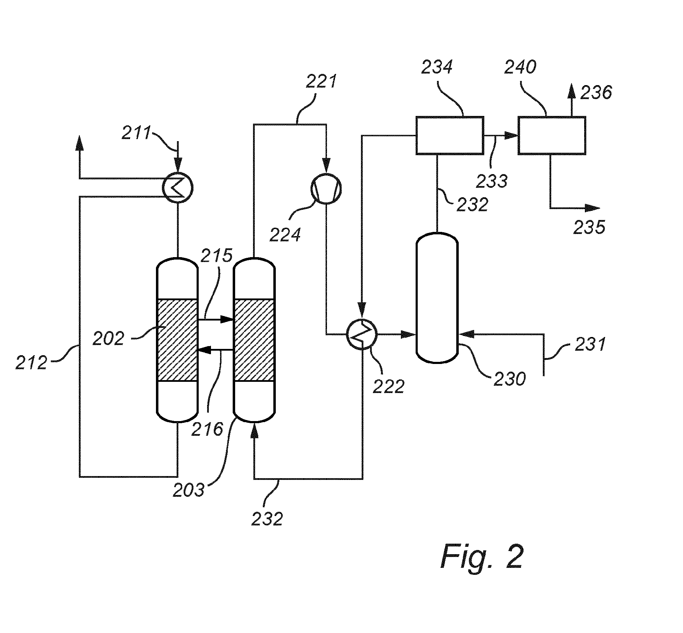

The system provided by the present invention is further described with reference to figures 1 and 2.

In Figure 1, according to one aspect of the invention, the partial pressure difference needed for oxygen release is provided by reducing the oxygen concentration in the second reactor vessel, for example by using a stripping medium.

In Figure 2, in another embodiment, the partial pressure difference needed for oxygen release is provided by using a substantially oxygen-free stripping gas. For example, the substantially oxygen-free gas is flue gas, preferably recirculated flue gas; or other oxygen-lean/oxygen-free gas streams.

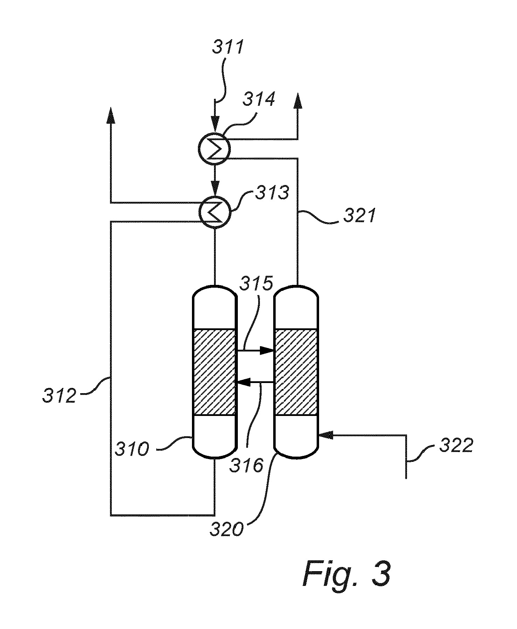

In figure 3, a previous known system is shown wherein the release of the oxygen is taking place in the fuel reactor.

In figure 1, a system 1 for producing oxygen for an oxy combustion process is displayed.

A part of system 1 includes a first reactor vessel, also called the 'air reactor, 2 and a second reactor vessel 3, also called 'the oxygen release' reactor. Oxygen carrier material in form of solid particles carrying oxygen is placed in the first reactor vessel 2, the air reactor, where it takes up oxygen present in the air (introduced into the first reactor vessel via duct 11) in accordance with the oxidation reactions described above.

Oxygen uptake is an exothermic reaction, and is preferably taking place at temperatures between 800 and 1200 degrees Celsius, typically at a temperature of 1000 degrees Celsius, depending on the oxygen carrier.

The particles having taken up the oxygen are then transferred to the second reactor vessel 3 via, for example, a cyclone, loop seal or screw 15. The oxygen partial pressure is decreased to a level wherein the partial pressure of oxygen in the gas atmosphere of the second reactor vessel is lower than the equilibrium partial pressure at the operating temperature, and the oxygen is released from the solid particles.

According to the embodiment in figure 1, the partial pressure is adjusted via addition of stripping medium, or stripping gas, introduced via duct 20. The stripping medium is at least partly condensable under the process conditions. It could be water vapour, for example, or any other condensable medium that is, on the one hand, gaseous in the range of the operating temperatures and pressures of the second reactor vessel and in liquid form at lower temperatures and/or higher pressures.

The partial pressure of the oxygen is adjustable by the chosen flow of the stripping gas and the operating pressure in the second reactor vessel.

The oxygen released in the second reactor vessel is transferred via duct 21 to a phase separation unit, separating the oxygen gas from the condensed stripping medium. Before entering the phase separation unit, the oxygen-rich gas is cooled by heat exchanging in one or more heat exchangers 22, 23. The gas can optionally be pressurized by a compressor 24 to facilitate compression of the stripping medium in the condenser at a higher pressure than present in 3. The oxygen obtained herewith is essentially pure.

The solid particles having released the oxygen are then returned to the first reactor vessel via line 16, so they re-enter the oxygen-uptake-release cycle in the first reactor vessel.

For example, the enriched oxygen stream is then forwarded via a duct to the combustion unit that is fed with fuel via line 31. Any oxy-fired combustion unit could be retrofitted with this invention, representing an alternative to state-of-the-art oxygen supply via cryogenic processes. As the oxygen carrier material is not in any contact with the fuel itself, as was proposed by prior CLOU systems, the particle life time is also bound to increase.

With reference to figure 2, a variation of the system for producing enriched O₂ gas is provided. In this system, recirculated flue gas is used to induce oxygen release. Also in this system, a first reactor vessel 202 and a second reactor vessel 203 are included wherein oxygen transfer is taking place. Solid particles carrying oxygen are placed in the first reactor vessel 1, the air reactor, wherein the particles bind oxygen present in the air introduced into the first reactor vessel via duct 211.

The oxidised particles are then transferred to the second reactor vessel 203 via line 215. The partial pressure is decreased to a level wherein the partial pressure of oxygen in the gas atmosphere of the second reactor vessel is lower than the equilibrium partial pressure at the operating temperature, and the oxygen is released, desorbed from the solid particles. When using recirculated flue gas, the concentration of oxygen in the flue gas must be lower than the oxygen equilibrium partial pressure in the second reactor vessel. Then the oxygen can be released from the oxygen carriers.

The second reactor vessel 203 is a reactor vessel wherein the partial pressure of the gas is adjustable. According to the embodiment in figure 2, the partial pressure is adjusted via the recirculated flue gas generated in the combustion reactor 230. The oxygen-rich gas generated in the second reactor vessel is forwarded via duct 221 to the combustion reactor 230. The gas is preferably pressurized in a fan, or a compressor, 224 before entering the combustion reactor. The applied downstream pressure can be so high, that water vapour condenses in 222, leaving an oxygen-enriched gas to enter the combustion reactor. This occurs when the unit 224 is a compressor. Moreover, 224 can be used to apply vacuum pressure in reactor 203 to lower the oxygen partial pressure for better oxygen release. In another operation mode, 224 is a fan, causing high stripping gas flow rates needed for sufficient oxygen release in 203. The gas may also be cooled by a heat exchange unit 222, depending on combustion requirements and necessary pre-heating of the gas flow in 232.

The oxygen carrier material, i.e. the solid particles, having released the oxygen are then returned to the first reactor vessel via line 216, for repeated uptake of oxygen.

According to some embodiments of the invention, the system also comprises means for introducing other oxygen-free or lean gases into the second reactor vessel, for example recirculated gas flows from downstream processes.

In the embodiment illustrated in Figure 2, the partial pressure of oxygen is adjusted by the recirculated flue gas from the combustion reactor 230. As a consequence of fuel combustion in 230, the oxygen partial pressure decreases strongly. The flue gas can be forwarded via duct 232 via heat exchanging in heat exchanging unit 222, optionally after having passed the Air Quality Control System (AQCS) 234 to the second reactor vessel 203 to serve as a stripping gas and induce oxygen release.

The remaining flue gas stream is optionally forwarded via duct 233 to a gas purification unit (GPU) 240 separating the carbon dioxide, forwarded via duct 235, present in the flue gas from the remaining gas, forwarded via duct 236. Oxygen-depleted process streams within the GPU, for example 235, can also be used as a stripping gas for oxygen release in 203 (not shown in figure 2).

In figure 3, the process scheme of an oxygen carrier-based combustion system presently investigated in science and literature is illustrated. The system comprises the first reactor vessel 310, the air reactor, comprising metal oxide particles for adsorption of the oxygen uptake present in the air introduced into the first reactor vessel via duct 311. The air introduced into the first reactor vessel is preheated by heat exchanging with the gases transferred from the first reactor vessel in heat exchanger 313, and by heat exchanging with the gas transferred from the second reactor vessel 320 in heat exchanger 314.

In the first reactor vessel 310, the oxygen carrier particles take up the oxygen by an exothermic reaction. The particles are then transferred, via line 315, to the second reactor vessel 320 wherein the particles comprising oxygen are mixed with the fuel added to the second reactor vessel.

Depending on the kinetics of the fuel and the oxygen carrier materials used, before the particles are returned to the first reactor vessel via pipe 316, they must be separated from unburned fuels, for example char, to avoid CO₂ capture efficiency losses. The separation is performed by any suitable separation unit (not shown in figure 3), for example, in cyclones or a carbon stripper fluidization reactor, connected to pipe 316. A drawback of this separation is that there are no means available for complete separation and fuel, like char, may remain in the stream of oxygen carriers transferred in pipe 316. In the first reactor vessel, this fuel is converted to carbon dioxide CO₂. The carbon dioxide is not accessible for capture, but leaves the system together with the air, via duct 312.

The off-gas passing the first reactor vessel 310 leaves the system via duct 312. The heat may be recovered by the heat exchanger 313.

The oxygen released in the second reactor vessel 320 is consumed in the burning of the fuel transferred to the reactor via line 322. The flue gas is transferred for further processing via duct 321.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

**1.** A method of releasing oxygen from oxygen carrier material comprising the steps of:
- uptake of oxygen by oxygen carrier material in a first reactor vessel 2;
- transferring the oxygen-loaded carrier material to a second reactor vessel 3;
- releasing the oxygen from the oxygen carrier material in the said second reactor vessel, wherein the partial pressure of oxygen in the gas atmosphere of said second reactor vessel is lower than equilibrium partial pressure at operating temperature;
- transferring the oxygen carrier material, after release of the oxygen, back to said first reactor vessel 2;
- forwarding the released oxygen for further processing.

**2.** The method according to claim 1, wherein the partial pressure of oxygen in the second reactor vessel being lower than equilibrium partial pressure at operating temperature is provided by reducing the oxygen concentration in the second reactor vessel by dilution.

**3.** The method according to any of claims 1 or 2, wherein the partial pressure of oxygen in the second reactor vessel being lower than equilibrium partial pressure at operating temperature is provided by reducing the oxygen concentration in the second reactor vessel by means of lowering the absolute pressure of the second reactor vessel 3.

**4.** The method according to any of claims 1 to 3, wherein the partial pressure of oxygen is reduced by adding a stripping medium that can be condensed in a downstream step.

**5.** The method according to any of claim 1 to 4, wherein the partial pressure of oxygen in the second reactor vessel being lower than equilibrium partial pressure at specified temperature is provided by reducing the oxygen concentration in the second reactor vessel by adding a substantially oxygen free gas, preferably by adding recirculated flue gas.

**6.** The method according to any of claims 1 to 5, wherein the partial pressure of oxygen is adjusted by adding a stripping medium, i.e. a substantially oxygen-free gas, preferably by adding recirculated flue gas.

**7.** The method according to any of claim 1 to 6 comprising an additional step of:
concentrating the oxygen, achieved by removing at least parts of the stripping medium from the stream.

**8.** The method according to any of claim 1 to 7 comprising an additional step of: recirculating the condensate of the stripping medium to the second reactor vessel.

**9.** The method to release oxygen according to any of claims 1 to 8, wherein the oxygen in the stream forwarded for further processing is concentrated.

**10.** The method according to any of claims 1 to 9, wherein the oxygen is forwarded for further processing in means requiring oxygen, preferably to an oxy combustor; preferably to an oxygen storage tank.

**11.** The method according to any of claim 1 to 10 wherein the oxygen carrier material is metal oxides, preferably the metal oxides of formula *n*Me*ₓ*O*_{y}*, wherein Me denotes a metal selected from Cu, Fe, Mn, Ni, Co; n denotes a stochiometric coefficient; x and y are integers defining the number of atoms.

**13.** A system for producing oxygen wherein oxygen is generated by uptake and release of oxygen from particles comprising oxygen, and the system comprises:
- a first reactor vessel comprising oxygen carrier material able to take up oxygen from air;
- a second reactor vessel into which the oxygen carrier material having taken up oxygen in the first reactor vessel is transferred for oxygen release;
- means of forwarding the released oxygen for further processing.

**14.** A system according to claim 13, wherein the second reactor vessel 3 is operating at a partial pressure of oxygen that is kept lower than equilibrium partial pressure at operating temperature so that oxygen can be released.

**15.** A system according to any of claims 13 to 14, wherein the oxygen carrier material are particles of metal oxide of formula *n*Me*ₓ*O*_{y}*, wherein the Me denotes a metal selected from Cu, Fe, Mn, Ni, Co, n denotes a stochiometric coefficient; x and y are integers defining the number of atoms.

**16.** A system according to any of claims 13 to 15, wherein the system also comprises a separation unit 10 wherein the oxygen is at least partly separated from the stripping medium, before it is forwarded for further processing.

**17.** A system according to any of claims 13 to 16, comprising means for recirculating gas substantially free from oxygen gas to the second reactor vessel 203; preferably, the gas substantially free from oxygen gas is flue gas.
